# FASCICULE DE BREVET EUROPEEN

(11) **EP 2 141 394 B1**
(45) Date de publication et mention de la délivrance du brevet: **18.01.2012**
(21) Numéro de dépôt: 09290539.7
(22) Date de dépôt: 03.07.2009
(51) Int. Cl.: F16K 11/048, F16K 31/00, G05D 23/13

(54) **Robinet mitigeur thermostatique**
Thermostat-Mischbatterie
Thermostatic mixer tap

(30) Priorité: 04.07.2008 FR 0803823
(43) Date de publication de la demande: 06.01.2010
(73) Titulaire: Delabie, 80534 Friville (FR)
(72) Inventeur: Normand, Marcel, 80820 Arrest (FR)
(74) Mandataire: Hammond, William

(56) Documents cités:
- EP-A- 0 187 378
- DE-A1- 4 116 954
- GB-A- 2 139 324
- US-A- 4 610 393
- US-A- 5 779 139
- US-B1- 6 575 377

## Description

La présente invention concerne un robinet mitigeur thermostatique pour la distribution d'eau mitigée sanitaire.

On connaît des robinets mitigeurs sanitaires tel que celui décrit dans le document EP-943.740-A. Un tel robinet comprend un corps principal, parfois dénommé carter, comportant un orifice d'admission d'eau froide, un orifice d'admission d'eau chaude et un orifice de sortie d'eau mitigée, et un chariot distributeur.

Ce chariot distributeur, ou navette, de forme cylindrique, comme par exemple celui-ci décrit dans le document EP-759.522-A, comporte un élément thermostatique et les sièges d'arrivée d'eau chaude et d'eau froide qui sont situés aux extrémités de ce chariot. Lorsque l'eau mitigée se réchauffe du fait par exemple d'un changement de débit ou de pression, l'élément thermostatique se dilate pour faire sortir un piston provoquant le déplacement du chariot distributeur, ce qui a pour effet de diminuer la section de passage pour l'eau chaude et d'augmenter la section de passage pour l'eau froide : la température d'eau mitigée tend ainsi à revenir à sa température initiale ou température de consigne.

Inversement, quand l'eau mitigée se refroidit, l'élément thermostatique se rétracte entraînant par là-même un déplacement du chariot distributeur provoquant une réduction de la section de passage pour l'eau froide et une augmentation de celle pour l'eau chaude.

Mais, selon les documents antérieurs ci-dessus, quand la pression d'eau froide baisse, la pression d'eau chaude, lui devenant supérieure, pousse le chariot distributeur dans le sens qui a tendance à réduire la section de passage pour l'eau froide : ceci accentue le déséquilibre et l'augmentation de la température de l'eau mitigée. Seul l'élément thermostatique par sa dilatation peut corriger cette augmentation de température : la régulation de la température mitigée est donc moins bonne en cas de variation de pression de l'eau chaude ou de l'eau froide.

Pour remédier à cet inconvénient, certains robinets mitigeurs comportent un élément thermostatique couplé avec un équilibreur de pression, tel que celui décrit dans le document EP-569.437-A : mais cette solution complique fortement la fabrication d'un tel robinet mitigeur et, de plus, augmente de façon assez importante le coût de revient.

De tels robinets sont déjà connus par les documents US 5 779 139, DE 4 116 954, GB 2 139 324 et US 4 610 393.

Aussi, un des buts de la présente invention est-il de fournir un robinet mitigeur thermostatique pour eau sanitaire permettant de pallier les inconvénients ci-dessus.

Un autre but de l'invention est de fournir un tel robinet qui permet d'éviter à un utilisateur de se brûler par contact avec le corps du robinet, même dans le cas où la température de l'eau mitigée deviendrait élevée.

Ces buts, ainsi que d'autres qui apparaîtront par la suite, sont atteints par un robinet mitigeur pour la distribution d'eau mitigée sanitaire comprenant, d'une part, un corps de forme générale cylindrique, qui est muni d'un orifice d'admission d'eau froide, d'un orifice d'admission d'eau chaude et d'un orifice de sortie de l'eau mitigée, comportant, du côté de l'orifice d'admission d'eau froide, un bouton pour commander le débit d'eau mitigée actionnant un mécanisme pour régler ce débit, et, du côté de l'orifice d'admission d'eau chaude, un bouton mitigeur pour réguler la température d'eau mitigée faisant partie d'une cartouche comprenant notamment un élément thermostatique, une navette et un siège, et, d'autre part, une conduite reliant cette cartouche à l'orifice de sortie de l'eau mitigée, lequel robinet est, selon la présente invention, caractérisé par le fait que la navette est constituée de deux éléments qui sont reliés entre eux et qui comportent chacun un épaulement se faisant face et constituant chacun un clapet, l'un pour l'eau chaude et l'autre pour l'eau froide, et que le siège rapporté double face, qui est rendu fixe à l'extérieur de cette navette, est disposé entre ces épaulements.

Avantageusement, le siège rapporté double face présente une première face vis-à-vis du clapet d'eau froide et une seconde face vis-à-vis du clapet d'eau chaude.

De préférence, le siège apporté double face est maintenu par une entretoise prolongeant le corps de tête et venant en appui sur la seconde face du siège.

Avantageusement, le siège est maintenu, côté arrivée eau froide, par une douille par laquelle l'eau mitigée est évacuée en direction de l'orifice de sortie.

Selon un mode de réalisation préféré de la présente invention, le siège rapporté double face est en forme d'anneau et est réalisé en élastomère renforcé par une âme rigide.

Avantageusement, l'élément thermostatique traverse la navette selon son axe longitudinal, qui est aussi celui du corps.

De préférence, la cartouche est contenue dans une chemise en un matériau isolant thermique qui est située entre le corps du robinet mitigeur et l'ensemble des éléments de régulation.

Avantageusement, la douille de sortie de l'eau mitigée se prolonge dans l'axe du corps du robinet par une conduite qui est coaxiale à ce corps, et totalement entourée par la conduite d'eau froide : ainsi, seule la conduite d'eau froide est en contact avec la paroi extérieure du corps du robinet mitigeur.

De préférence, la conduite d'eau mitigée est le siège du mécanisme de réglage de débit de l'eau mitigée actionné par le bouton pour commander le débit d'eau mitigée.

Selon un mode de réalisation préféré, les deux éléments de la navette sont rendus solidaires par vissage d'un écrou sur l'élément thermostatique.

La description qui va suivre et qui ne présente aucun caractère limitatif, doit être lue en regard des figures annexées, parmi lesquelles :

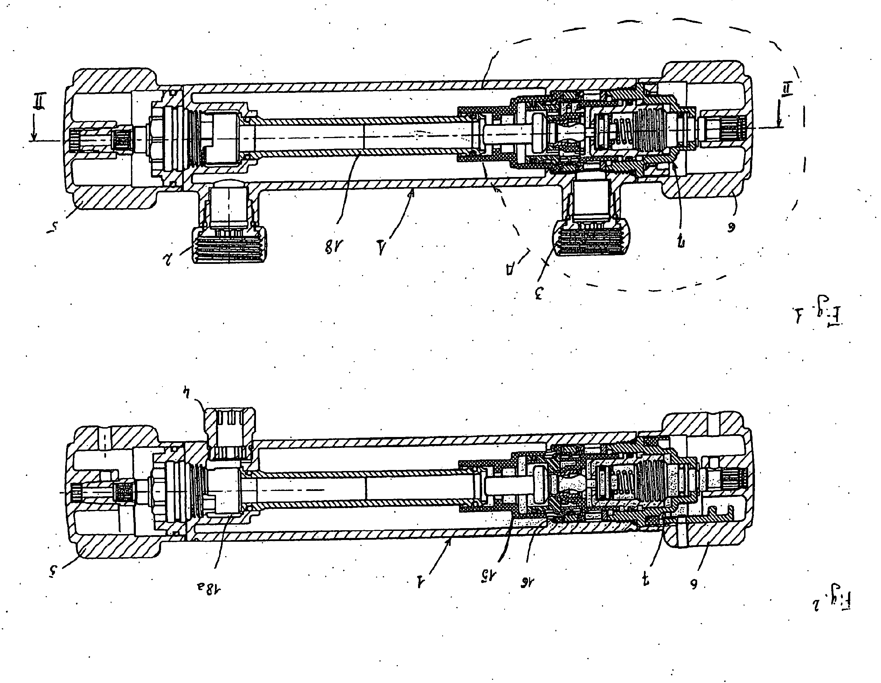

- la figure 1 est une vue en coupe transversale d'un robinet mitigeur thermostatique pour eau sanitaire selon la présente invention :
- la figure 2 est une vue en coupé de ce robinet selon la ligne II-II de la figure 1;

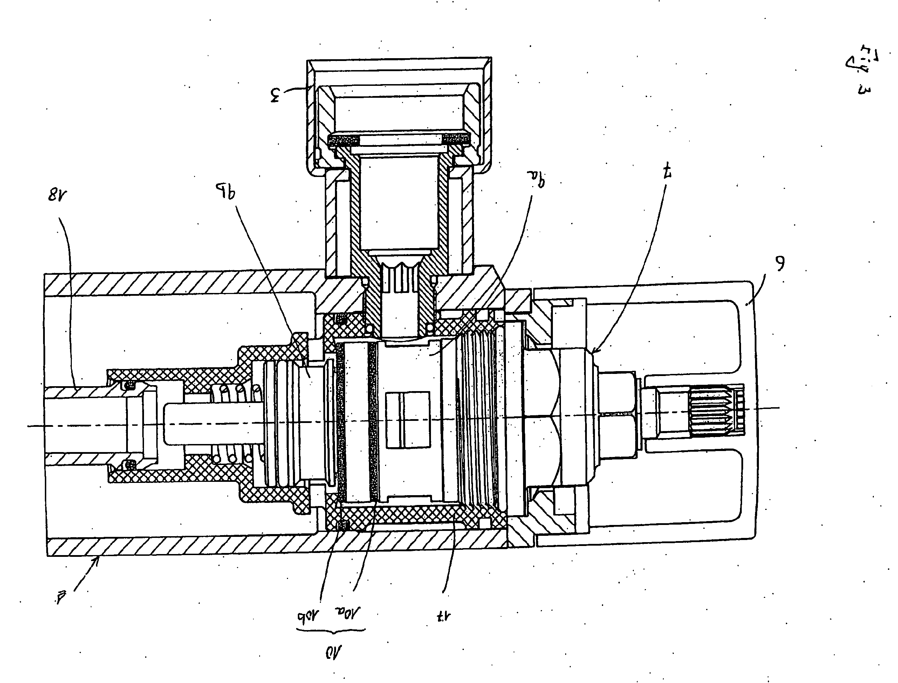

- la figure 3 est une vue grossie de la partie A du robinet représenté à ta figure 1 et comportant un isolant thermique ;

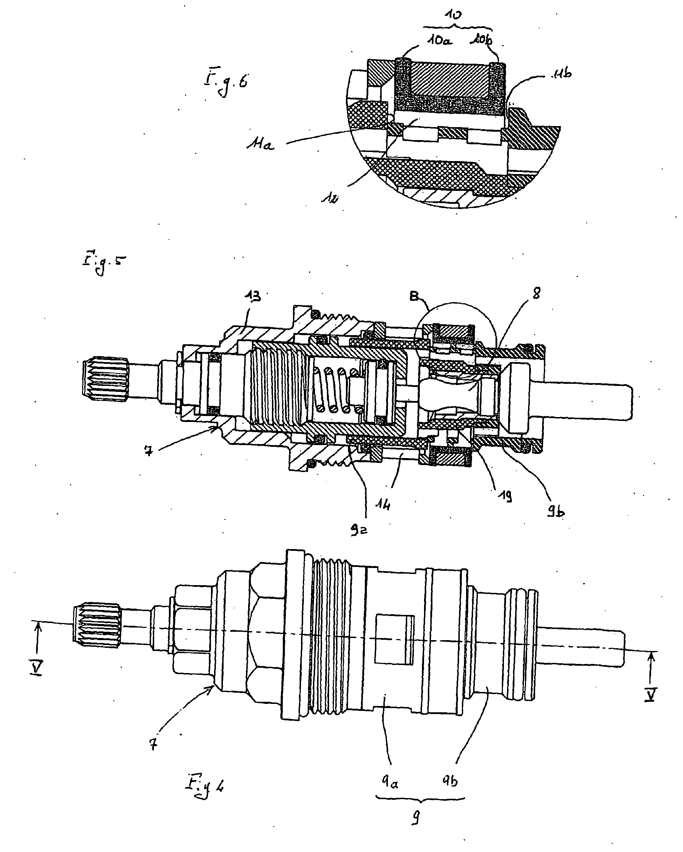

- la figure 4 est une vue extérieure du sous ensemble ou cartouche 7 ;
- la figure 5 est une vue en coupe de la cartouche selon la ligne V-V de la figure 4 ; et,
- la figure 6 est une vue grossie du détail B de la figure 5.

Ainsi qu'on peut le voir sur ces figures, un robinet mitigeur thermostatique pour la distribution d'eau sanitaire comprend un corps 1, qui est muni d'un orifice d'admission d'eau froide 2, d'un orifice d'admission d'eau chaude 3 et d'un orifice de sortie 4 de l'eau mitigée.

Ce corps 1 de forme générale cylindrique, selon le présent exemple de réalisation, comporte, du côté de l'orifice d'admission d'eau froide, un bouton 5 pour commander le débit d'eau mitigée actionnant un mécanisme de réglage de ce débit, et du côté de l'orifice d'admission d'eau chaude un bouton mitigeur 6 pour réguler la température de l'eau mitigée. Ce bouton mitigeur 6 appartient à une cartouche 7 disposée dans ce robinet mitigeur et connue en elle-même.

Cette cartouche 7 comprend, en particulier, un élément thermostatique 8, une navette 9 ou chariot distributeur et un siège 10.

L'élément thermostatique 8 est connu en lui-même et commandé par le bouton mitigeur 6.

Le navette 9 est, selon la présente invention, constituée de deux éléments 9a et 9b qui sont reliés entre eux, par exemple par filetage, et qui comportent chacun un épaulement 11 a et 11 b. Les épaulements 11 a et 11 b se font face constituant un double clapet : dans le cas présent, l'épaulement 11a constitue le clapet pour l'eau chaude et l'épaulement 11 b le clapet pour l'eau froide.

Entre les deux clapets 11a et 11b, donc dans la gorge 12, est disposé le siège 10 qui est rapporté, du genre à double face, et qui est rendu fixe à l'extérieur de la navette 9.

Le siège 10 rapporté double face présente donc une première face 10b vis-à-vis du clapet eau froide 11b et une seconde face 10a vis-à-vis du clapet eau chaude 11a. Ce siège 10 est maintenu dans le corps 1 du robinet mitigeur par le corps de tête 13 du mécanisme mitigeur et préférablement par l'intermédiaire d'une entretoise 14 qui prolonge ce corps de tête 13 et vient en appui sur la seconde face 10a du siège 10.

Le siège 10 peut être maintenu côté arrivée eau froide par une douille 15 par laquelle l'eau mitigée est évacuée en direction de l'orifice de sortie 4. Cette douille 15 prend appui sur un épaulement 16 porté par le corps 1 du robinet mitigeur; elle se prolonge dans le corps 1 par une conduite 18.

Le siège 10 rapporté double face, qui est en forme d'anneau, peut être réalisé en élastomère renforcé par une âme rigide qui empêche un tel siège de sortir de son logement. De plus, le fait de réaliser ce piège 10 en élastomère a pour davantage de garantir une étanchéité parfaite entre la seconde face 10a de celui-ci et le clapet 11a en cas d'une forte chute de pression ou d'une coupure d'eau froide.

L'élément thermostatique 8 traverse la navette 9 selon son axe longitudinal, qui est aussi celui du corps 1. Il peut comporter un filetage recevant un contre-écrou 19 qui permet de rendre solidaire entre eux les deux éléments 9a et 9b de la navette 9.

La cartouche 7, telle que décrite ci-dessus, peut être contenue dans une chemise 17 en un matériau isolant thermique et constituant alors la douille 15 ; elle est donc située entre le corps 1 du robinet mitigeur et l'ensemble des éléments de régulation déjà décrits : ceci permet d'éviter une montée en température du corps 1 du robinet mitigeur côté arrivée eau chaude.

Selon une variante de réalisation, la face intérieure de cette chemise 17 sert de face d'appui pour le siège 10. De plus, cette chemise 17 est prolongée à l'intérieur du corps 1 par la conduite 18 d'eau mitigée jusqu'à l'orifice de sortie 4 d'eau mitigée qui est située vers l'autre extrémité de ce robinet

La conduite 18 en matériau isolant thermique baigne entièrement dans l'eau froide, traversant ainsi de part en part axialement le circuit d'eau froide dans le corps 1. Ainsi seule l'eau froide est en contact avec l'enveloppe du corps 1. De plus, cette conduite 18 constitue le siège 18a pour le mécanisme réglant le débit d'eau mitigée par le bouton 5.

Ainsi que l'aura compris l'homme du métier, dans le robinet mitigeur thermostatique selon la présente invention, l'eau froide remplit la plus grande partie du corps principal 1 : la conduite 18 pour l'évacuation de l'eau mitigée baigne donc dans de l'eau froide.

## Revendications

1. Robinet mitigeur thermostatique pour la distribution d'eau mitigée sanitaire comprenant, d'une part, un corps (1) de forme générale cylindrique, qui est muni d'un orifice d'admission d'eau froide (2), d'un orifice d'admission d'eau chaude (3) et d'un orifice de sortie (4) de l'eau mitigée, comportant du côté de l'orifice d'admission d'eau froide, un bouton (5) pour commander le débit d'eau mitigée actionnant un mécanisme de réglage dudit débit, et, du côté de l'orifice d'admission d'eau chaude (3), un bouton mitigeur (6) pour réguler la température d'eau mitigée, et, dans lequel est disposée une cartouche (7) comprenant notamment un élément thermostatique (8), une navette (9) et un siège (10), et, d'autre part, une conduite reliant ladite cartouche (7) audit orifice de sortie (4) d'eau mitigée, **caractérisé par le fait que** la navette (9) est constituée de deux éléments (9a) et (9b) qui sont reliés entre eux et comportent chacun un épaulement (11a, 11b) se faisant face et constituant chacun un clapet, l'un (11a) pour l'eau chaude et l'autre (11b) pour l'eau froide, et que ledit siège (10) constitue un siège rapporté double face, qui est rendu fixe à l'extérieur de ladite navette (9), et qui est disposé entre lesdits épaulements (11a, 11b).

2. Robinet selon la revendication 1, **caractérisé par le fait que** le siège (10) rapporté double face présente une première face (10b) vis-à-vis du clapet d'eau froide (11b) et une seconde face (10a) vis-à-vis du clapet d'eau chaude (11a).

3. Robinet selon la revendication 2, **caractérisé par le fait que** le siège (10) est maintenu par une entretoise (14) prolongeant le corps de tête (13) et venant en appui sur la seconde face (10a) du siège (10).

4. Robinet selon la revendication 1, **caractérisé par le fait que** le siège (10) est maintenu, côté arrivée eau froide, par une douille (15 ou 17) par laquelle l'eau mitigée est évacuée en direction de l'orifice de sortie (4).

5. Robinet selon la revendication 1, **caractérisé par le fait que** le siège (10) rapporté double face est en forme d'anneau et est réalisé en élastomère renforcé par une âme rigide.

6. Robinet selon la revendication 1, **caractérisé par le fait que** l'élément thermostatique (8) traverse la navette (9) selon son axe longitudinal, qui est aussi celui du corps (1).

7. Robinet selon la revendication 1, **caractérisé par le fait que** la cartouche (7) est contenue dans une chemise (17) en un matériau isolant thermique qui est située entre le corps (1) dudit robinet mitigeur et l'ensemble des éléments de régulation.

8. Robinet selon la revendication 4, **caractérisé par le fait que** la douille (15 ou 17) de sortie de l'eau mitigée se prolonge dans l'axe dudit corps (1) par une conduite (18), lesdites douille (15, ou 17) et conduite (18) étant totalement entourées par la conduite d'eau froide.

9. Robinet selon la revendication 8, **caractérisé par le fait que** la conduite (18) d'eau mitigée est le siège (18a) du mécanisme de réglage du débit d'eau mitigée.

10. Robinet selon la revendication 6, **caractérisé par le fait que** les deux éléments (9a) et (9b) de la navette (9) sont rendus solidaires par vissage d'un écrou (19) sur l'élément thermostatique (8).

## Claims

1. A thermostatic mixer tap for the supply of domestic mixed water comprising, on the one hand, a generally cylindrical body (1) which is provided with a cold-water inlet aperture (2), a hot-water inlet aperture (3) and a mixed water outlet aperture (4) comprising, at the cold-water inlet aperture end, a button (5) to control the mixed water output by actuating a mechanism to regulate the said output and, at the hot-water inlet aperture (3) end, a mixer button (6) to regulate the mixed water temperature and in which a cartridge (7) is arranged comprising more especially a thermostatic element (8), a shuttle (9) and a seat (10) and, on the other hand, a pipe connecting the said cartridge (7) to the said mixed water outlet aperture (4), **characterised in that** the shuttle (9) comprises two elements (9a) and (9b) which are connected to one another and which each comprise a collar (11 a, 11 b) facing one another and each forming a valve, one (11a) for the hot water and the other (11b) for the cold water, and **in that** the said seat (10) forms a separate double-face seat, which is attached to the outside of the said shuttle (9), and which is arranged between the said collars (11a, 11b).

2. A tap according to claim 2, **characterised in that** the separate double-face seat (10) has a first face (10b) opposite the cold-water valve (11b) and a second face (10a) opposite the hot-water valve (11a).

3. A tap according to claim 1, **characterised in that** the seat (10) is held by a spacer (14) extending the head body (13) and resting on the second face (10a) of the seat (10).

4. A tap according to claim 1, **characterised in that** the seat (10) is held, at the cold-water inlet end, by a bush (15 or 17) through which the mixed water escapes towards the outlet aperture (4).

5. A tap according to claim 1, **characterised in that** the separate double-face seat (10) is ring shaped and is produced from elastomer reinforced by a rigid core.

6. A tap according to claim 1, **characterised in that** the thermostatic element (8) passes through the shuttle (9) along its longitudinal axis, which is also that of the body (1).

7. A tap according to claim 1, **characterised in that** the cartridge (7) is contained in a sleeve (17) produced from a thermal insulating material which is situated between the body (1) of the said mixer tap and the set of regulating elements.

8. A tap according to claim 4, **characterised in that** the mixed water outlet bush (15 or 17) is extended in the axis of the said body (1) by a pipe (18), the said bush (15 or 17) and pipe (18) being completely surrounded by the cold-water pipe.

9. A tap according to claim 8, **characterised in that** the mixed water pipe (18) is the seat (18a) of the mixed water output regulating mechanism.

10. A tap according to claim 6, **characterised in that** the two elements (9a) and (9b) of the shuttle (9) are made integral by screwing a nut (19) on the thermostatic element (8).

## Patentansprüche

1. Thermostat-Mischbatterie zur Abgabe von gemischtem Sanitärwasser, umfassend einerseits ein Gehäuse (1) mit im wesentlichen zylindrischer Form, welches eine Kaltwasser-Einlauföffnung (2), eine Warmwasser-Einlauföffnung (3) und eine Mischwasser-Auslauföffnung (4) aufweist, umfassend einen Knopf (5), auf Seite der Kaltwasser-Einlauföffnung (2), zur Einstellung des Mischwasser-Durchsatzes durch Betätigung eines Mechanismus zum Regeln dieses Durchsatzes und einen Mischknopf (6), auf Seite der Warmwasser-Einlauföffnung (3), zur Regelung der Temperatur des Mischwassers, und in welchem ein Einsatz (7) angeordnet ist, welcher hauptsächlich ein Thermostatelement (8), einen Schlitten (9) und einen Sitz (10) umfasst, und andererseits eine Leitung welche den Einsatz (7) mit der Mischwasser-Auslauföffnung (4) verbindet, **dadurch gekennzeichnet, dass** der Schlitten (9) aus zwei Elementen (9a) und (9b) besteht, die miteinander verbunden sind und jeweils eine Schulter (11a, 11b) umfassen, welche sich gegenüberliegen und jeweils einen Schließkörper bilden, die eine (11a) für Warmwasser, die andere (11b) für Kaltwasser, und dass der Sitz (10) einen doppelseitigen Einbausitz bildet, welcher außen am Schlitten (9) festgehalten und zwischen den Schultern (11a, 11b) angeordnet ist.

2. Mischbatterie nach Anspruch 1, **dadurch gekennzeichnet, dass** der doppelseitige Einbausitz (10) eine erste Seite (10b) gegenüber dem Kaltwasser-Schließkörper (11b) und eine zweite Seite (10a) gegenüber dem Heißwasser-Schließkörper (11a) aufweist.

3. Mischbatterie nach Anspruch 1, **dadurch gekennzeichnet, dass** der Sitz (10) durch einen Steg (14) gehalten ist, welcher den Gehäusekopf (13) verlängert und an der zweiten Seite (10a) des Sitzes (10) anliegt.

4. Mischbatterie nach Anspruch 1, **dadurch gekennzeichnet, dass** der Sitz (10) auf Seite des Kaltwassereinlaufs durch eine Buchse (15 oder 17) gehalten wird, durch welche das Mischwasser zur Auslauföffnung (4) abgeführt wird.

5. Mischbatterie nach Anspruch 1, **dadurch gekennzeichnet, dass** der doppelseitige Einbausitz (10) ringförmig ist und aus elastischem Polymer verstärkt mit einem starren Kern hergestellt ist.

6. Mischbatterie nach Anspruch 1, **dadurch gekennzeichnet, dass** das Thermostatelement (8) den Schlitten (9) entlang seiner Längsachse durchquert, welche auch Längsachse des Gehäuses (1) ist.

7. Mischbatterie nach Anspruch 1, **dadurch gekennzeichnet, dass** der Einsatz (7) in einem Mantel (17) aus einem Wärmedämmmaterial enthalten ist, welcher zwischen dem Gehäuse (1) der Mischbatterie und der Gesamtheit der Regelelemente angeordnet ist.

8. Mischbatterie nach Anspruch 4, **dadurch gekennzeichnet, dass** die Buchse (15 oder 17) des Mischwasser-Auslaufs sich in der Achse des Gehäuses (1) durch eine Leitung (18) verlängert, wobei die Buchse (15 oder 17) und die Leitung (18) vollständig durch die Kaltwasserleitung umgeben sind.

9. Mischbatterie nach Anspruch 8, **dadurch gekennzeichnet, dass** die Mischwasser-Leitung (18) den Sitz (18a) des Einstellmechanismus des Mischwasser-Durchsatzes darstellt.

10. Mischbatterie nach Anspruch 6, **dadurch gekennzeichnet, dass** die beiden Elemente (9a) und (9b) des Schlittens (9) durch Aufschrauben einer Schraubenmutter (19) an das Thermostatelement (8) miteinander fest verbunden sind.
